# EUROPÄISCHE PATENTANMELDUNG

(11) **EP 3 929 841 A1**
(43) Veröffentlichungstag der Anmeldung: **29.12.2021**
(21) Anmeldenummer: 21181015.5
(22) Anmeldetag: 22.06.2021
(51) Int. Cl.: G06Q 10/08

(54) **SYSTEM UND VERFAHREN ZUR ERKENNUNG UND VERMEIDUNG VON BILDFEHLERN**

(30) Priorität: 24.06.2020 DE 102020003861
(71) Anmelder: MetraLabs GmbH Neue Technologien und Systeme, 98693 Ilmenau (DE)
(72) Erfinder: Bley, Andreas, 98693 Ilmenau (DE); Martin, Christian, 98693 Ilmenau (DE); Baake, Sebastian, 98693 Ilmenau (DE); Schröter, Christof, 98693 Ilmeneau (DE); Ulbrich, Stefan, 98693 Ilmenau (DE); Trabert, Johannes, 98693 Ilmenau (DE)

(57) **Zusammenfassung**

Die Erfindung umfasst ein System und Verfahren zur Erkennung und Vermeidung von Bildfehlern, wie sie bspw. bei der Erstellung von Abbildungen von Produkten, Waren und/oder Regalen entstehen. Dazu werden, in einem Aspekt, Hindernisse zwischen dem das Bild aufnehmenden Sensor und den abzubildenden Produkten, Waren und/oder Regalen detektiert und die Abbildungserstellung unterdrückt oder verzögert. In einem Aspekt erfolgen Repositionierungen des Bilderfassungssensors.

## Beschreibung

### Gebiet der Erfindung:

Die Erfindung umfasst ein System und Verfahren zur Erkennung und Vermeidung von Bildfehlern, wie sie bspw. bei der Erstellung von Abbildungen von Produkten, Waren und/oder Regalen entstehen.

### Hintergrund der Erfindung

Die Erfindung betrifft die Erfassung von Produkten, Waren und/oder Regalen bzw. Warenauslagen, bspw. in Form von Abbildungen, mit dem Ziel der weiterführenden Auswertung der erfassten Daten. Als Aufzeichnungsvorrichtung werden bspw. mobile Roboter eingesetzt, die in einem Aspekt autonom navigieren. Die Abbildungen werden bspw. zu Inventarisierungszwecke vorgenommen, um das Fehlen von Waren zu erkennen, usw.

Bei der Erstellung der Abbildungen ist es möglich, dass Bildfehler o.ä. entstehen, bspw. durch Objekte zwischen der aufzeichnenden Sensorik und den aufzuzeichnenden Arealen. Diese Bildfehler können die Weiterverarbeitung der Aufzeichnungen und damit deren Auswertung erschweren. Daher besteht das Ziel, diese Bildfehler o.ä. zu vermeiden, was durch die sensorische Auswertung der abzubildenden Areale in einem Aspekt und/oder Navigationsaspekte in einem anderen und/oder ergänzenden Aspekt realisiert wird.

### Stand der Technik

Im Stand der Technik sind Roboter bekannt, die Regale mit Waren bildlich erfassen, die Bilder auswerten, um bspw. den Warenbestand in den Regalen auszuwerten. So beschreiben z.B. US 10210603, US2018107999 und US 10176452 einen Roboter zur Regalerfassung und -auswertung im Einzelhandel. Der Roboter ist ferner in der Lage, Planogramme der Regale zu erstellen und das Areal, in dem er sich bewegt, zu kartieren. US10019803 beschreibt bspw. einen Roboter zur Regalerfassung, der mittels eines vertikalen LIDARs ein Regal erfasst und auswertet. US2018020145 dagegen stellt dar, wie ein Roboter zur bildbasierten Erfassung von Regalen Reflektionen auf zu fotografierenden Oberflächen dadurch reduziert, dass die Beleuchtungsintensität der Oberflächen variiert wird. US2018101813 oder WO2019023249 dagegen nutzen zwei Kamerasysteme mit unterschiedlichen Auflösungen zur Regalerfassung. US2019087772 umfasst einen Roboter, der basierend auf von mittels Fotos erfassten Produkten eine Auswertung vornimmt, welche die Ermittlung eines Schwellwerts umfasst, der basierend auf der Art und der Anzahl von in den Bildern erfassten Produkten ermittelt wird.

Das Ziel dieser Roboter ist es jeweils, Regale visuell zu erfassen und die darin enthaltenen Waren zu identifizieren. Dabei kommt es, wie in US2018020145 illustriert, auf die Qualität an, mit der die Aufzeichnungen vorgenommen werden. Bewegt sich nun ein Roboter durch ein Areal mit Regalen, in welchem sich auch Menschen aufhalten, kann es vorkommen, dass diese Menschen sich zwischen Roboter und Regal befinden und damit mit aufgenommen werden. Das bedeutet zugleich, dass Teile der aufzunehmenden Regalfläche verdeckt werden. Damit wird eine Auswertung der erfassten Bilder der Regale fehlerbehaftet, d.h. es kommt zu Messungenauigkeiten.

Im Stand der Technik sind dagegen keine Systeme oder Verfahren beschrieben, die explizit Hindernisse bei der Erstellung von Abbildungen von Produkten, Waren und /oder Regalen berücksichtigen und demnach die Abbildungserstellung anpassen.

### Beschreibung der Erfindung

Mit Blick auf die Erfassung von Produkten, Waren, Warenauslagen und/oder Regalen wird ein System beschrieben, das die Beeinflussung der Erfassung durch Hindernisse versucht zu minimieren. Dabei handelt es sich in einem Aspekt um einen mobilen Roboter, der mit entsprechenden Erfassungsvorrichtungen ausgestattet ist.

Konkret soll die Verdeckung bspw. der Regale durch Menschen und/oder andere Hindernisse vermieden werden. Dazu verfügt der hier beanspruchte Aufzeichnungsvorrichtung über die Fähigkeit, Hindernisse wie bspw. Menschen zwischen aufzeichnender Sensorik wie bspw. einer Kamera und Abbildungsareal wie bspw. einem Regal zu erkennen und den Aufzeichnungsprozess ggü. dem Nicht-Vorhandensein von solchen Hindernissen entsprechend anzupassen. Dabei kann eine Aufzeichnung im Fall der Hindernisdetektion nicht erfolgen (in einem Aspekt unter Fahren eines Ausweichmanövers, wobei damit kein Hindernis mehr im abzubildenden Bereich vorhanden ist); zu einem späteren Zeitpunkt erfolgen, wenn keine Hindernisse mehr vorhanden sind; und/oder erfolgen mit einer Weiterverarbeitung der Abbildungen bspw. mit dem Ziel der Anonymisierung der Abbildungen. Diese Funktionalität ist auf verschiedenen alternativen und/oder ergänzenden Wegen implementiert. Weiterhin ist beschrieben, wie in einem Aspekt eine Verbesserung der Abbildungsqualität durch Sensorrepositionierung, bspw. in Form von Fahrmanövern, erfolgen kann.

### Zeichnungen

Die Erfindung wird nun mit Hilfe der Zeichnungen näher beschrieben. Es zeigen:
Fig. 1 Roboter und verbundenes System
Fig. 2 Architektursicht des Roboters
Fig. 3 sensorische Erfassung von Hindernissen zwischen Inventur-Sensor und Regal
Fig. 4 Evaluation der Abbildungsqualität
Fig. 5 Navigationsaspekte
Fig. 6 Metadaten-Auswertung
Fig. 7 Erfassungsbereiche
Fig. 8 Temperatursensor-Auswertung
Fig. 9 automatisierte Qualitätsverbesserung
Fig. 10 Regallückenerkennung
Fig. 11 Ablauf Regallückenerkennung
Fig. 12 Regallückenerkennung und Winkelauswertung

### Detaillierte Beschreibung der Erfindung

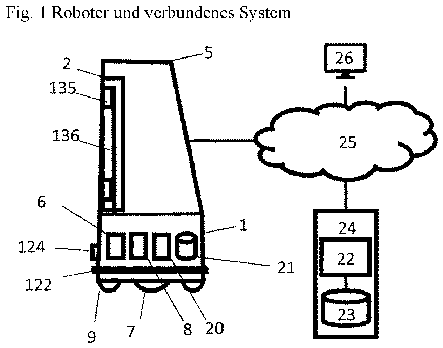

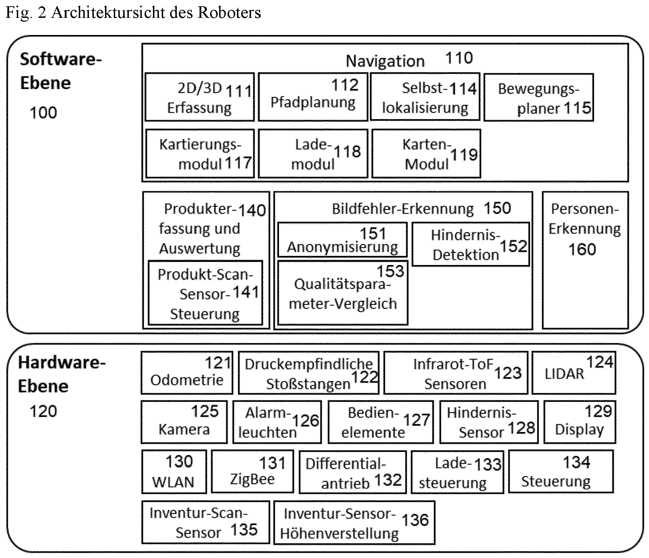

Das beanspruchte System (siehe Fig. 1 und Fig. 2) umfasst eine mobile Basis 1 und einen Aufbau 5. Im Aufbau befindet sich eine Abbildungserfassungseinheit 2 Einheit zum Erfassen digitaler Abbildungen wie bspw. einen Produktscan-Sensor 135 für einen Inventur-Scan, in einem Aspekt eine Kamera. Der Productscan-Sensor 135 kann bspw. über eine Produktscan-Sensor-Höhenverstellung 136 höhenverstellbar angeordnet sein. Die Höhenverstellung kann hierbei elektrisch, hydraulisch, pneumatisch oder mittels äquivalenter Mittel erfolgen. Das System verfügt weiterhin über eine Abbildungsprozessierungseinheit 3 zur Prozessierung digitaler Abbildungen mit einem Abbildungsspeicher 4 zum Abspeichern digitaler Abbildungen und darin hinterlegten Instruktionen zur Prozessierung der digitalen Abbildungen. Bei der Abbildungsprozessierungseinheit 3 zur Prozessierung digitaler Abbildungen mit dem Abbildungsspeicher 4 zum Abspeichern digitaler Abbildungen kann es sich, in einem Aspekt, um den Systemrechner 20 (des Roboters 10) und den Systemspeicher 21 (des Roboters 10) handeln, wobei im Systemspeicher 21 verschiedene Instruktionen abgelegt sind, die nachfolgend näher beschrieben werden.

Die mobile Basis 1 selbst verfügt über eine Antriebseinheit 6, bspw. als Differentialantrieb gestaltet, sowie z.B. zwei Antriebsräder 7. Der Roboter 10 verfügt über eine Energiequelle 8, z.B. einen Akkumulator, der sich ebenfalls in der mobilen Basis 1 befindet. Dieser Akkumulator verfügt über Schnittstellen, um damit an eine Ladevorrichtung anzudocken und den Akkumulator wieder zu laden. Hierzu ist eine Ladesteuerung 133 implementiert. In einem Aspekt ist die mobile Basis 1 rund. Dabei sind die genannten Antriebsräder 7 parallel zueinander sowie auf einer Achse angeordnet, die den Kreismittelpunkt des Roboters 10 schneidet. Daneben verfügt die mobile Basis 1 über Stützräder 9, in einem Aspekt z.B. mindestens zwei, die bspw. ebenfalls auf einer Achse angeordnet sind, die den Kreismittelpunkt der mobilen Basis 1 schneidet und die orthogonal zur ersten Achse angeordnet ist. Durch eine solche Anordnung ist es möglich, dass sich die mobile Basis 1 auf der Stelle dreht, was durch gegenläufiges Ansteuern der Antriebsräder 7 möglich ist. Die Form der mobilen Basis 1 und die Anordnung der Antriebsräder 7 kann, in einem alternativen Aspekt, von dieser Anordnung abweichen. Der Roboter 10 verfügt ferner über eine Steuerung 134. Daneben verfügt der Roboter 10 über mindestens eine Funkschnittstelle, z.B. WLAN 130, um mit einem externen Rechner (z.B. 22) zu kommunizieren, welcher sich außerhalb des Roboters 10 befindet, und über eine Cloud-Anbindung 25 erreichbar ist.

Der Roboter 10 verfügt über mindestens eine Sensoreinheit zur Navigationszwecken. Hierbei handelt es sich um einen LIDAR 124 und/oder eine 2D und/oder 3D-Kamera 125, bspw. eine RGB-D-Kamera. Der LIDAR 124 ist bspw. so angeordnet, dass er das Umfeld des Roboters 10 in der üblichen Fahrtrichtung erfasst. Die Daten werden hierbei z.B. lokal im Systemrechner 20 ausgewertet, in einem Aspekt findet eine Übertragung in die Cloud 25 zu Auswertungszwecken statt. Es können daneben weitere LIDAR 124 verbaut sein, die bspw. auch rückwärts orientiert sind. In einem alternativen Aspekt kommen hierbei Radarsensoren zum Einsatz oder Ultraschallsensoren. Mit Blick auf die Kamera 125 können sowohl Speckle-Kameras, Stereokameras oder Time-of-Flight-(ToF)-Kameras zum Einsatz kommen, bspw. eine Astra Orbbec oder eine Microsoft Kinect. Auch ist der Einsatz von mehr als einer Kamera 125 möglich, wobei diese bspw. in unterschiedliche Richtungen orientiert sein können.

In Fahrtrichtung orientiert befindet sich in einem Aspekt im Abstand von bspw. mehr als 10 Millimetern über dem Boden der mobilen Basis 1 eine druckempfindliche Stoßstange 122 (bzw. kombinierte Gummi-gepufferte Schaltleisten mit Aufprallschutz). Alternativ und/oder ergänzend können auch ToF-Sensoren und/oder sog. Nahbereichs-LIDAR/ Radar/ Ultraschallsensoren als Abstandssensoren genutzt werden. Diese ist u.a. mit der Steuerung 134 verbunden und dient der Kollisionsdetektion. So wird im Fall einer Kollision die Antriebseinheit 6 sofort gestoppt.

Über eine Schnittstelle ist der Roboter 10 mit einem externen System 24 verbunden, das vom Roboter 10 erfasste Daten erhält. Diese können von diesem externen System 24 in einem Aspekt ausgewertet werden, in einem anderen Aspekt einem anderen System über eine Schnittstelle zur Weiterverarbeitung zur Verfügung gestellt werden. In diesem System können auch der externen Rechner 22 und der externe Speicher 23 positioniert sein.

Fig. 2 stellt eine Architektursicht dar. Es gibt zwei Ebenen, die Hardwareebene 120 und die Software-Ebene 100. Auf der Hardwareebene findet sich ein Odometrie-Einheit 121, mittels der die vom Roboter 10 zurückgelegte Wegstrecke über das Messen der von den Antriebsrädern 7 zurückgelegten Distanz ermittelt wird. Dazu sind entweder an einem Motor (und hier bspw. der Achse) und/oder an den Antriebsrädern 7 bzw. einem eventuell vorhandenen Getriebe Sensoren zur Ermittlung des Drehwinkels vorhanden. Das System ist ferner so konfiguriert, dass über die Winkelermittlung in Zusammenhang mit dem Durchmesser der Antriebsräder und etwaiger, zwischengeschalteten Getriebeübersetzungen die zurückgelegte Wegstrecke ermittelt werden kann. Hierbei kann es sich bspw. um Hall-Sensoren, Encoder bzw. Inkrementalgeber, Stroboskop-Drehzahlmesser, Tachogenerator, Induktionsgeber und/oder einen Wiegand-Sensor, etc. handeln. In einem Beispiel können die Encoder bzw. Inkrementalgeber (per Lichtschranke) mehr als 1024 Schritte auslesen, die Hall-Sensoren 24 Schritte.

Druckempfindliche Stoßstangen 122 und (optional) Infrarot-ToF-Sensoren 123 (ToF = Time of flight) sind hardwarenahe Mechanismen zur Kollisionsdetektion, wie bspw. ein LIDAR 124, der jedoch auch zur Navigation eingesetzt wird, wofür alternativ und/oder ergänzend auch die Kamera 125 genutzt werden kann. Diese kann eine 2D oder 3D-Kamera sein, in einem Aspekt eine RGB-D-Kamera. In einem optionalen Aspekt kann der Roboter 10 über Alarmleuchten 126 verfügen, die Menschen in seinem Umfeld warnen. Ein optionales Display 129 sowie Bedienelemente 127 erlauben die Bedienung des Roboters 10, welches ferner mit einer Schnittstelle für ein Drahtlosnetzwerk wie WLAN 130 oder Bluetooth, etc. ausgestattet ist sowie optional mit einem Kommunikationsmodul, in Fig. 2 der Kürze wegen als ZigBee 131 bezeichnet. Dieses kann z.B. zur Roboter-Roboter-Kommunikation eingesetzt werden. Über eine dieser Drahtlosschnittstellen (130, 131) können z.B. in einem optionalen Aspekt mit Zeitbezug (Zeitstempel) Informationen wie die Position des Roboters 10 (vorzugsweise auf einer Karte), die aktuelle Geschwindigkeit und die geplante Route übertragen werden. Erhält der Roboter 10 die Route eines anderen Roboters, wird diese als dynamisches Hindernis in der Karte des Roboters 10 eingetragen und/oder in der Pfadplanung berücksichtigt, vorzugsweise sobald ein Distanzschwellwert zwischen den beiden Robotern 10 unterschritten wird. Alternativ und/oder ergänzend kann das Kommunikationsmodul 131 auch zum Ansteuern von bspw. Türen, Toren, etc. genutzt werden wie auch anderer, externer Systeme wie Warnvorrichtungen, usw.

Ein Differentialantrieb 132 sorgt für die Bewegung der Antriebsräder 7. Eine Ladesteuerung 133 ist für das Aufladen des internen Akkumulators konfiguriert. Eine Motorsteuerung 137 bringt die Sensorelemente mit dem Differentialantrieb 132 zusammen und sorgt dafür, dass im Falle einer Hindernisdetektion eine Anpassung der Geschwindigkeit vorgenommen wird. Der Roboter 10 kann, je nach Konfiguration, über mindestens einen Produktscan-Sensor 135 für einen Inventur-Scan verfügen, wobei es sich um eine 2D- oder eine 3D-Kamera handeln kann oder aber einen LIDAR (2D oder 3D). Der Produktscan-Sensor 135 kann, in einem Aspekt, auch vertikal in der Höhe über die Produktscan-Sensor-Höhenverstellung 136 verstellbar sein, in einem Aspekt mittels eines elektronisch geregelten Antriebs. Dieser Produktscan-Sensor 135 ist im Wesentlichen senkrecht zur Fahrtrichtung des Roboters 10 ausgerichtet und/oder im Wesentlichen senkrecht zu den Regalen, die erfasst werden sollen. In einem Aspekt kann der Roboter 10 auch über einen Hindernissensor 128 verfügen, dessen Aufzeichnungen bspw. zusammen mit Daten von mindestens einem weiteren Sensor ausgewertet werden, bspw. auf dem Weg der Sensordatenfusion. Alternativ ist auch ein anderer Sensor wie Ultraschall usw. hier denkbar. Dieser mindestens eine Hindernissensor 128 überlappt mindestens anteilig in seinem Erfassungsbereich mit dem des Produktscan-Sensors 135.

Auf der Software-Ebene 100 befindet sich ein Navigationsmodul 110, umfassend ein 2D/3D Erfassungsmodul 111 für die 2D und/oder 3D-Umfelderfassung, ein Pfadplanungsmodul 112, mittels dessen der Roboter 10 effizient den eigenen, zurückzulegenden Weg berechnen und hinsichtlich bestimmter Kriterien in seinem Aufwand bewerten kann. Das Navigationsmodul 110 ist u.a. dafür bestimmt, die Position des Roboters 10 zu ermitteln. Die Positionsermittlung kann bspw. mittels des Odometrie-Moduls 121 oder durch Erkennung charakteristischer Merkmale aus einer Umfelderkennung (auf Basis des LIDARs 124 oder einer Kamera 125) und einem Abgleich mit im Kartenmodul 119 hinterlegten Karten, die diese Merkmale ebenfalls beinhalten, bspw. unter Berücksichtigung der durch die Kamera 125 und den LIDAR 124 ermittelten Entfernungen zu diesen Merkmalen erfolgen. Die Positionsermittlung kann bspw. im Selbstlokalisierungsmodul 114 für die Selbstlokalisierung des Roboters 10 in seinem Umfeld implementiert sein. Ferner umfasst das Navigationsmodul 110 ein Bewegungsplaner 115, der u.a. die Ergebnisse der Pfadplanung aus dem Pfadplanungsmodul 112 und errechnet eine optimale Wegstrecke für den Roboter 10 unter Berücksichtigung bzw. Optimierung verschiedener Kostenfunktionen. Als Kostenfunktionen fungieren neben den Daten aus der Pfadplanung auch solche aus der Hindernisvermeidung, einer Vorzugsfahrrichtung, usw. Hierbei kommt der im Stand der Technik bekannte Dynamic Window Approach zum Einsatz. Weiterhin verfügt der Roboter 10 über ein Kartierungsmodul 117 für die Kartierung des Umfelds, sowie ein Lademodul 118 das automatische Aufladen. Letzteres bedeutet, dass der Roboter 10, bspw. wenn die Spannung des Akkumulators unter einen definierten Schwellwert fällt, automatisch eine Ladestation aufsucht. Der Roboter 10 verfügt ferner über ein Kartenmodul 119, in welchem Karten seines Umfelds abgelegt wurden, bspw. nach Erstellung durch das Kartierungsmodul 117.

Der Roboter 10 verfügt auch über ein Produkterfassungs- und Auswertungs-Modul 140, in welchem wie nachfolgend beschrieben Inventurprozesse gesteuert und ggf. ausgewertet werden. Dieses Produkterfassungs- und Auswertungs-Modul 140 verfügt über ein Produkt-Scan-Sensor-Steuerungsmodul 141, welches den mindestens einen Produktscan-Sensor 135 ansteuert wie bspw. auch die Produktscan-Sensor-Höhenverstellung 136 des Inventur-Sensors. Das Produkterfassungs- und Auswertungs-Modul 140 kann bspw. auch die Übertragung der vom mindestens einen Produktscan-Sensor 135 aufgezeichneten Daten, bspw. digitalen Bildern, über die Cloud 25 an ein externes System 24 steuern. Bei den übertragenen Daten kann es sich um Rohdaten der Abbildungen handeln, um vorprozessierte Abbildungen (bspw. um entzerrte Bilder), um ausgewertete Abbildungen, die bspw. die Position, die Anzahl und/oder Art der erfassten Produkte umfassen, und/oder die Position, Anzahl und/oder Art der erfassten Produkte und/oder Regallücken handeln, um Preisinformationen, usw.

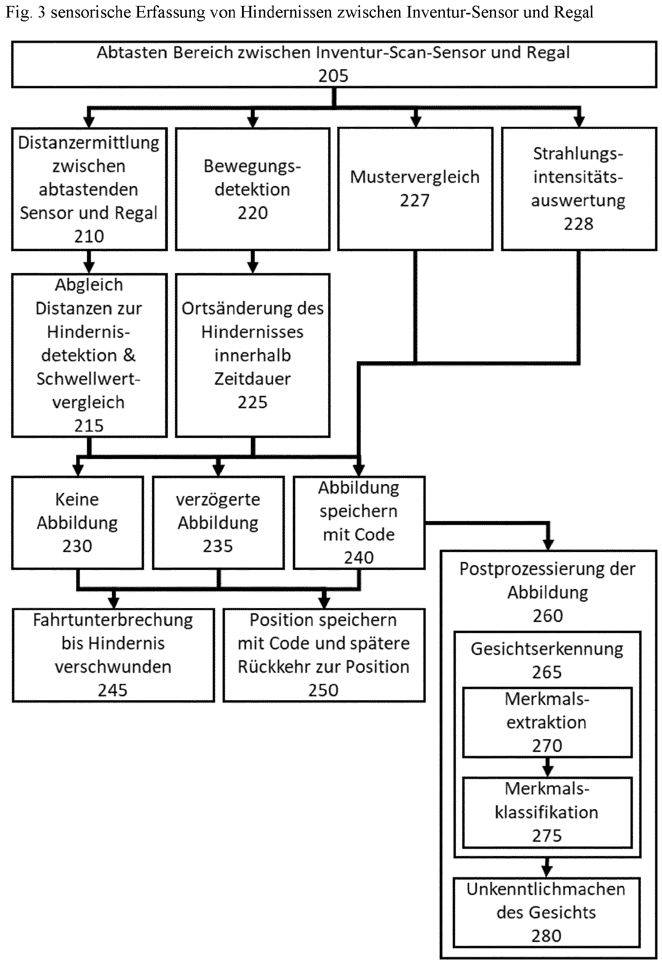

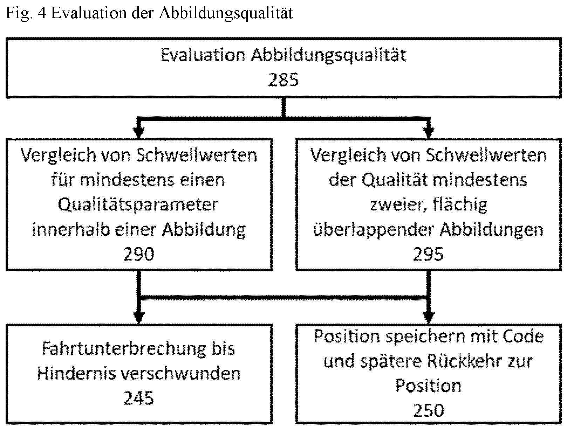

Der Roboter 10 verfügt ferner über ein Modul zur Erkennung und/oder Vermeidung von Sensorfehlern, als Bildfehler-Erkennungsmodul 150 bezeichnet. Ein Anonymisierungsmodul 151 kann wiederum dafür sorgen, dass aufgezeichnete Sensordaten zumindest teilweise anonymisiert werden, wie weiter unten näher beschrieben wird (z.B. in Fig. 3). Ferner verfügt das Bildfehler-Erkennungsmodul 150 über ein Hindernisdetektionsmodul 152, wobei darunter Hindernisse verstanden werden, die die Sichtbarkeit auf die sensorisch zu erfassende Regalfläche einschränken. Die in diesem Modul hinterlegten Instruktionen sind ebenfalls in Fig. 3 näher erläutert. Die im Qualitätsparameter-Vergleichsmodul 153 für den Vergleich von Qualitätsparametern ablaufenden Instruktionen sind z.B. in Fig. 4 näher beschrieben. Weiterhin verfügt der Roboter, in einem Aspekt, über ein Personenerkennungsmodul 160.

### Bildauswertung

Der Roboter 10 kann die Aufzeichnung von Produkten, Waren und/oder Regalen wie Warenaus- oder Ablagen in einem Aspekt auch dann vornehmen, wenn sich im Umfeld der Produkte, Waren und/oder Regale wie Warenaus- oder Ablagen, usw. Personen befinden und sich eine Person (oder ein Teil von ihr, ein von der Person bewegter Gegenstand, etc.) zwischen Kamera und Produkt, Ware und/oder Regal wie eine Warenaus- oder Ablage befindet. Dies kann jedoch mehrere Implikationen haben, die die Qualität der Erfassung der Produkte, Waren und/oder Regale wie Warenaus- oder Ablagen negativ beeinflussen, was bspw. zu verschiedenartigen Bildfehlern führt, die eine Extraktion von Produkten oder Regallücken erschweren oder gar unmöglich machen. Erstens können Gegenstände in der Warenaus- oder -ablage durch die Person mindestens anteilig verdeckt und damit nicht vollständig erkennbar sein, so dass bei der Erzeugung einer Abbildung die dahinterliegende Produkten, Waren, Regal-/Ablage/Auslagefläche nicht abgebildet und damit nicht auswertbar ist. Zweitens kann dies dazu führen, dass bspw. beim Einsatz einer Kamera als Produktscan-Sensor 135 durch den Autofocus der Kamera der Bereich der Produkte, Waren, Regale bzw. Warenaus- oder -ablage nicht scharfgestellt wird, sondern der Bereich der Person bzw. der sonstigen Gegenstände, die sich zwischen dem Produktscan-Sensor 135 und den Produkten, Waren, Regalen bzw. Warenaus- oder -ablagen befindet. Damit würde nicht nur ein Teilbereich des Regals bzw. der Warenaus- oder -ablage, der verdeckt wird, nicht erkennbar sein, sondern die Regalfläche bzw. die Warenaus- oder -ablage auf dem Bild insgesamt. Unabhängig von diesen Aspekten kann die bildliche Erfassung einer Person insbesondere dann, wenn das Bild ausreichend Informationen zur Identifizierung der Person enthält wie bspw. deren Gesicht, eine Verletzung von Datenschutzbestimmungen vorliegen.

Der Roboter 10 ist daher in einem Aspekt so konfiguriert, dass er Personen, Teile von Personen und/oder Gegenstände zwischen Produktscan-Sensor 135 und Regal bzw. Warenaus- oder -ablage erkennen kann, wie im Ablauf in Fig. 3 näher dargestellt. Dies geschieht in einem Aspekt mittels mindestens eines Hindernissensors 128, der den Bereich zwischen dem Produktscan-Sensor 135 und dem Regal bzw. der Warenaus- oder -ablage abtastet 205, wobei sich die abzutastenden Flächen mindestens anteilig überlappen. In einem Aspekt überlappen sich die Flächen in wesentlichen Teilen. Beim mindestens einen Hindernissensor 128 kann es sich um einen Radar-, Ultraschall-, ToF-Sensor, eine Kamera, einen Infrarot-Sensor (bspw. zur Wärmedetektion, wie einen Wärmesensor 142 oder ein Wärmebildsensor 143) oder einen anderen Nahbereichssensor handeln. In einem Aspekt wird eine Distanzermittlung zwischen dem abtastenden Hindernissensor 128 (in einem Aspekt dem Produktscan-Sensor 135) und dem Regal 210 genutzt, wobei im Systemspeicher 21 (des Roboters 10) Regeln hinterlegt sind, die je Erfassungswinkel Abstände beschreiben, die bspw. die Distanz bis zum Regal definieren. Bei dieser Distanz handelt es sich bspw. um die typische Distanz, aus der Produkte, Waren und/oder Regale erfasst werden, wobei diese Distanz aus der Waagerechten, die durch den Produktscan-Sensor 135 und der Senkrechten, die durch die dem Produktscan-Sensor 135 zugewandten Seite der zu erfassenden Produkte, Waren und/oder Regale definiert. Abweichungen von dieser Distanz unter einem Schwellwert werden damit als Hindernisse detektiert 215. Alternativ und/oder ergänzend zur Distanzermittlung wird auf die Detektion einer Bewegung (Schritt 220) abgestellt, d.h. eine Detektion von Hindernissen, die einer Ortsänderung innerhalb einer definierten Zeitdauer unterliegen 225. Dazu wird bspw. die Zeitdauer ausgewertet, über die ein Hindernis sich an einer bestimmten Position befindet. In einem Aspekt wird eine Ortsänderung analog zu handelsüblichen Bewegungsmeldern erfasst, die jeweils einzelne Zonen überwachen und im Fall, dass ein Objekt von einer Zone in die nächste übergeht, eine Bewegung detektiert wird. Hierfür können bspw. auch Infrarot-Sensoren eingesetzt werden wie ein Wärmesensor 142. Alternativ und/oder ergänzend können die vom Sensor Hindernissensor 128 erfassten Daten durch Mustervergleich 227 mit Blick auf die Detektion einer Person ausgewertet werden, wobei bspw. Aufzeichnungen der Hindernisse mit abgespeicherten Aufzeichnungen von Personen verglichen werden und durch Ähnlichkeitsvergleiche Personen detektiert werden. In einem Aspekt kann bspw. im Fall, dass der Hindernissensor 128 eine 3D-Kamera ist, bspw. mittels zugehörigen SDK (wie bspw. dem SDK für die Microsoft Kinect) ein Skelettmodell-Erkennungsalgorithmus ablaufen, wobei bei Detektion eines Skelettmodells eine Person als Hindernis erkannt wird. Alternativ und/oder ergänzend kann eine Personendetektion über eine Strahlungsintensitätsauswertung 228 bzw. Wärmedetektion erfolgen, bspw. durch den Einsatz eines Wärmesensors 142 oder Wärmebildsensors 143, wobei erfasste Temperaturen im Bereich der Körpertemperatur und darunter bis in etwa zur Umgebungstemperatur ausgewertet werden. Wird ein Hindernis zwischen Roboter 10 und Regal detektiert, z.B. auf einem der drei genannten Wege, wird entweder keine Abbildung des Regals vorgenommen 230, es wird eine verzögerte Abbildung des Regals vorgenommen 235 (bspw. nach einem definierten Zeitintervall und/oder wenn keine Detektion des Hindernisses mehr erfolgt), oder die entsprechende Abbildung wird in einem Speicher (21, 23) zusammen mit einem Code abgelegt 240, der bspw. im Rahmen einer Post-Prozessierung der aufgezeichneten Abbildungen verwendet wird. Eine nähere Darstellung möglicher Post-Prozessierungen findet sich weiter unten.

Die Identifizierung eines Hindernisses hat zur Folge, dass der Roboter 10 bspw. seine Fahrt unterbricht und wartet, bis das Hindernis nicht mehr detektiert wird 245. Alternativ und/oder ergänzend setzt der Roboter seine Fahrt fort, speichert aber in Speicher (21, 23) einen Code zusammen mit der Position, an der das Hindernis vorhanden war, und fährt diese Position zu einem späteren Zeitpunkt erneut an 250. Der Roboter 10 prüft dann, ob sich das Hindernis entfernt hat und erstellt in dem Fall eine Abbildung des Regals/der Warenaus- oder -ablage (d.h.es werden die Schritte 205-250 zzgl. etwaiger Post-Prozessierung erneut durchlaufen).

Im Rahmen einer Post-Prozessierung der Abbildungen 260 werden solche Abbildungen, die wie beschrieben mit einem Code markiert worden sind, gesondert ausgewertet. Dabei findet eine Gesichtserkennung 265 durch einen Vergleich von Mustern statt, umfassend eine Merkmalsextraktion 270 und eine Merkmalsklassifikation 275 statt, um innerhalb der Abbildung Muster wie Gesichter von Personen zu identifizieren, wozu bspw. das Softwaretool OpenCV genutzt werden kann. Im Stand der Technik sind hierzu verschiedene Lösungen bekannt (z.B. DOI: 10.1007/978-3-642-39402-7_16; 10.1007/s11263-017-0988-8), die u.a. Histograms-of-Gradients als Merkmale nutzen und es gibt auch Anbieter, die kommerzielle Werkzeuge zur Gesichtserkennung anbieten wie bspw. die Cognitec GmbH, Dresden. Auf Basis dieser Gesichtserkennung erfolgt auf Basis von im Stand der Technik bekannten Ansätzen das automatisierte Unkenntlichmachen 280 (z.B. Verpixeln oder Schwärzen) von den Bildbereichen, die Gesichter darstellen, bspw. indem die Zahl der Pixel im Gesichtsbereich indirekt reduziert wird, indem mehrere aneinandergrenzende Pixel den gleichen Farbwert erhalten, bspw. auf dem Weg der Mittelwertbildung der Farbwerte der einzelnen Pixel. Es gibt Produkt-Lösungen von der 3DIS GmbH oder Guardian Project am Markt, die dies realisieren. Damit enthalten die Abbildungen, die durch den Roboter 10 abgespeichert und übertragen wurden, keine Gesichtsdaten. Diese Prozessierung der Abbildungen kann entweder im Roboter 10 selbst oder aber in einem cloudbasierten System 24 erfolgen, zu denen die Abbildungen übertragen wurden.

In einem alternativen und/oder ergänzenden Aspekt ist der Roboter 10 (alternativ ein mit dem Roboter 10 verbundener externer Rechner (z.B. 22), der die vom Roboter 10 aufgezeichneten Abbildungen erhält), derart konfiguriert, dass dieser nach der Aufnahme die Abbildungsqualität evaluiert 285. Dies ist in Fig. 4 näher dargestellt. Dazu findet eine Musterauswertung statt, bspw. mittels Merkmalsextraktion und eine Merkmalsklassifikation, um bestimmte Parameter zu erkennen, darunter Reflexionen, die Bildschärfe, das Rauschen, die Helligkeit, Personen und/oder Teile von Personen und/oder Gegenstände zwischen dem Produktscan-Sensor 135 und dem Regal bzw. der Warenaus- bzw. Ablage. Die klassifizierten Abbildungen werden anschließend danach bewertet, ob sie bestimmte Qualitätskriterien mit Blick auf die Parameter erfüllen. Dies geschieht zum einen durch den Vergleich von Qualitätsparametern innerhalb einer Abbildung 290, wobei verschiedene Areale untereinander verglichen werden bspw. auf dem Weg der Segmentierung der Abbildung in Areale. Ein Qualitätsparameter kann z.B. die Schärfe der Abbildung sein, die zwischen verschiedenen Regionen von einem definierten Wert abweicht, das Rauschen, etc. Für die Ermittlung der Schärfe kann bspw. die Varianz der ermittelten, aneinander grenzenden Farbpixel herangezogen werden und/oder die Distanz der ermittelten RGB-Werte, welche mit hinterlegten Schwellwerten verglichen werden. So können für Pixel x1y1 bspw. für R aus der RGB-Skala (von 0 bis 255) der R-Wert 30, für Pixel y1y2 der R-Wert 80 vorliegen, wobei dann die Differenz dazwischen (80-30=50) gebildet und mit einem Schwellwert verglichen wird, z.B. 30. Die Abbildung wird ferner in verschiedene Regionen aufgeteilt und es werden jeweils derartige Schwellwerte ermittelt. Wenn es Regionen gibt, bei denen die Schwellwerte unterschritten werden, wird für diese Region eine geringe Qualität registriert.

Alternativ und/oder ergänzend können, in einem Aspekt, für ein Abbild abgespeicherte Werte mit Werten solcher Abbildungen verglichen werden, die zeitlich und/oder räumlich zuvor aufgezeichnet worden sind. Damit findet ein Mustervergleich statt. Das kann in einem Aspekt heißen, dass kurz zuvor bereits eine Abbildung aufgenommen wurde, welches auf Basis des zeitlichen Abstands und der Geschwindigkeit des Roboters 10 mindestens anteilig mit dem später (und einem örtlich nicht auf der gleichen Stelle) aufgezeichneten Abbildung überlappt. Alternativ und/oder ergänzend können hierbei Abbildungen herangezogen werden, die auf der im Wesentlichen örtlich gleichen Position aufgenommen wurden und die demzufolge ebenfalls überlappen. Dabei können extrahierte Merkmale der Abbildungen bzw. daraus abgeleitete Klassifikationen mit den Klassifikationen der später aufgezeichneten Abbildung verglichen werden und auf Basis der ermittelten Abweichungen bzw. Schwellwerten eine Bewertung vorgenommen werden, ob die Abbildung die Qualitätskriterien bei den genannten und/oder ähnlichen Parametern erfüllt 295. Wird in einem der Schritte 290 oder 295 ein Nicht-Erfüllen der Qualitätsparameter festgestellt (was bspw. auf ein Hindernis im Bild hindeutet), erfolgt eine Fahrtunterbrechung und es wird nach einem definierten Zeitintervall eine erneute Abbildung erstellt und so ausgewertet 245. Alternativ wird im Navigationsmodul 110 des Roboters 10 eine Markierung bzw. Code gesetzt, die bzw. der die Position wiedergibt, an der die Abbildung getätigt wurde. Der Roboter 10 fährt dann zu einem späteren Zeitpunkt diese Position erneut an, um eine Abbildung anzufertigen 250.

### Pfadplanung des Roboters auf Basis automatisierter Auswertung der Qualität aufgezeichneter Bilder

Im Kartenmodul 119 des Roboters 10 ist eine Karte hinterlegt, die nicht nur Hindernisse umfasst, die der Roboter 10 umfahren muss, sondern auch Pfade, die der Roboter 10 für die Erstellung von Abbildungen der Regale zurücklegt. In dieser Karte können auf Wegmarken hinterlegt sein, an denen der Roboter 10 die Abbildungen erstellt. Diese können neben einer Information, dass die Aufnahmen erstellt werden, auch weitere Informationen darüber enthalten, mit welchem Aufnahmewinkel der mindestens eine Produktscan-Sensor 135 die Aufnahme vornimmt (wobei der Aufnahmewinkel vom Lot gemessen wird, das auf den Regalen steht) und/oder aus welcher vertikalen Position, die über die Produktscan-Sensor-Höhenverstellung 136 einstellbar ist.

Der Roboter 10 (und/oder ein mit dem Roboter 10 verbundenes, externes System 24) ist in einem Aspekt in der Lage, im Zeitablauf die erfassten Abbildungen bspw. durch einen Mustervergleich auszuwerten und zu erfassen, an welchen Positionen und/oder mit welchen Aufnahmewinkeln Qualitätsparameter der aufgenommenen Abbildungen beeinträchtigt werden. Zu diesen Beeinträchtigungen zählen Parameter wie Schärfe, Helligkeit, Rauschen, Reflexionen, etc. Der Roboter 10 kann, in einem Aspekt, beim nächsten Passieren der Position (bzw. des räumlichen Umfelds der Position) die Aufnahme von einer anderen Position, unter einem anderen Aufnahmewinkel, etc., vornehmen und die Qualitätsparameter auswerten. Dabei kann in einem Aspekt vom Roboter 10 geprüft werden, ob sie in einem Speicher 21 (oder 23) hinterlegte Qualitätsschwellwerte überschreiten bzw. innerhalb von Intervallen der Qualitätsparameter liegen. In einem alternativen und/oder ergänzenden Aspekt werden die Qualitätsparameter mit denen einer Abbildung verglichen, die an derselben Position und/oder mit einem Aufnahmewinkel (bzw. an einer Position und/oder einem Aufnahmewinkel, die bzw. der zur vorangegangenen Position bzw. Aufnahmewinkel einen definierten Abstand nicht überschreitet) angefertigt wurde. Dabei wird als Folge des Vergleichs eine Position bzw. ein Aufnahmewinkel bestimmt, der einen definierten und/oder besseren Qualitätswert erreicht. Bei einem eventuellen erneuten Passieren des räumlichen Bereichs wird, ausgehend von dieser Position und/oder dem Aufnahmewinkel, der entweder den Qualitätsschwellwert erreicht hat und/oder den besseren Qualitätswert erreicht hat, eine Varianz der Position und/oder des Aufnahmewinkels vorgenommen und erneut ein derartiger Vergleich durchgeführt. Hierbei können, in einem Aspekt, evolutionäre Algorithmen zum Einsatz kommen, um ein Optimum für die Bildqualität für die räumliche Aufnahmeposition und/oder den Aufnahmewinkel zu finden. Der Roboter 10 kann, in einem Aspekt, die ein- und dieselbe Aufnahmeposition und/oder Aufnahmewinkel auch mehrmals auswerten (bspw. durch Abspeichern von Aufnahmen im Zeitverlauf und Mustervergleich der verschiedenen, abgespeicherten Aufnahmen), um zu evaluieren, ob die Aufnahme durch Einmaleffekte eine Qualitätsbeeinträchtigung erleidet (bspw. durch eine Person, die sich im Umfeld des Roboters 10 aufhält), oder ob es sich um einen systematischen Fehler handelt wie bspw. eine Reflexion aufgrund der fest installieren Beleuchtung. Ein systematischer Fehler wird bspw. dadurch erkannt, dass auf in etwa der gleichen Aufnahmeposition und/oder unter in etwa gleichem Aufnahmewinkel im Zeitverlauf ähnliche Fehler detektiert werden). Die ermittelten Aufnahmepositionen werden wiederum an das Navigationsmodul 110 des Roboters 10 übertragen, wo sie zu absolvierende Route des Roboters 10 anpassen.

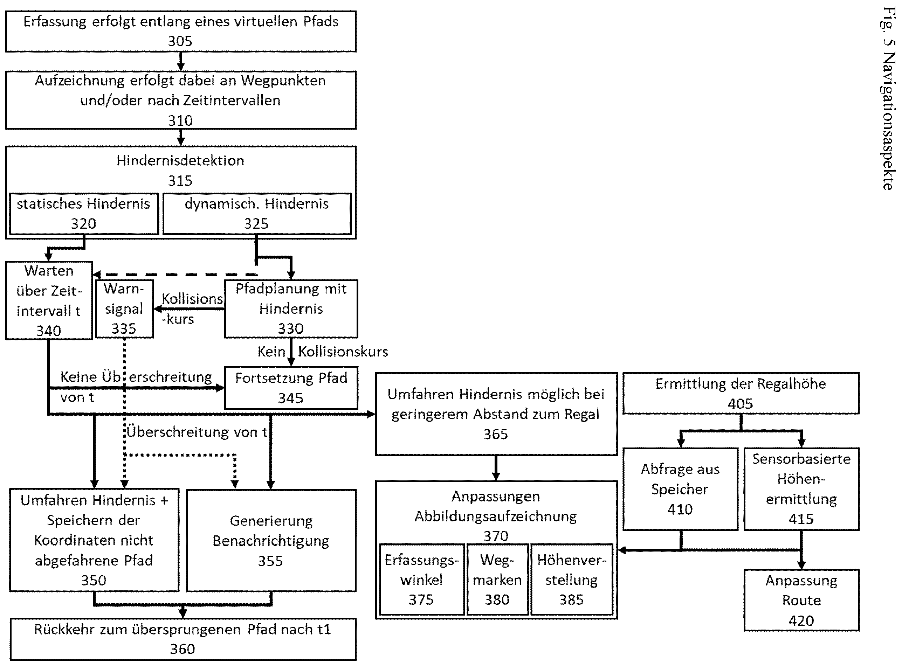

In einem Aspekt ist der Roboter so konfiguriert, wie bspw. in Fig. 5 ersichtlich ist, dass er sich mittels einer Karte sich in seinem Umfeld zurechtfindet und auf einem definierten, virtuellen Pfad entlang eines Regals bewegt 305, wobei virtuell bedeutet, dass dieser Pfad nicht auf dem Boden markiert ist, sondern sich aus im Roboter 10 abgelegten Regeln ergibt, bspw. eine Serie von Koordinaten, die der Roboter abfahren soll. Dieser Pfad ist bspw. parallel oder weitestgehend parallel zum Regal, von welchem Abbildungen angefertigt werden sollen. Die Geschwindigkeit dabei ist bspw. konstant. Aufnahmen des Regals werden dabei z.B. innerhalb definierter Zeitintervalle angefertigt und/oder an definierten, virtuellen Wegmarken 310. Diese Wegmarken können virtuell sein, d.h. im Kartenmodul 119 in einer abgelegten Karte als Koordinaten vermerkt sein, oder sich aber durch Markierungen im Regal ergeben, bspw. Barcodes , die über den Produktscan-Sensor 135 erfasst und ausgelesen werden.

Beim Abfahren des virtuellen Pfads kann es vorkommen, dass der Roboter 10 ein Hindernis detektiert 315, bspw. eine Person, die sich vor dem Regal befindet. Erfasste Hindernisse werden bspw. über Belegtheitskarten ausgewertet, die beschreiben, ob und wie lange eine definierte Position auf einer Karte durch ein Hindernis belegt ist. Dabei klassifiziert der Roboter 10 zunächst das Hindernis als bewegliches, d.h. dynamisches Hindernis 325 oder statisches Hindernis 320, indem er die Verweildauer auf der jeweiligen Belegtheitskarte auswertet und bei einem Positionswechsel über Mindestdistanzen innerhalb eines definierten Zeitintervalls (bspw. mittels eines Schwellwertvergleichs) als beweglich einstuft, anderenfalls als fixes (statisches) Hindernis. Die Hinderniserkennung findet z.B. mittels eines LIDARs statt. Es können jedoch auch andere Sensoren wie ToF-Sensoren, Ultraschall, Radar, und/oder eine Kamera oder andere Mittel genutzt werden, die den gleichen Zweck erfüllen.

Im Fall eines statischen Hindernisses 320 wartet der Roboter 10 über ein Zeitintervall t 340, ob sich das Hindernis entfernt. Passiert dies innerhalb dieses Zeitintervalls, setzt er seine Fahrt auf dem virtuellen Pfad fort 345. Geschieht dies nicht, umfährt der Roboter 10 das Hindernis und speichert die Koordinaten vom nicht abgefahrenen Pfad 350. Alternativ und/oder ergänzend generiert er eine Benachrichtigung 355, welche über eine Kommunikationsschnittstelle (130 oder 131) des Roboters 10 versendet wird. Darüber kann bspw. Personal informiert werden, das Hindernis zu entfernen. Der Roboter 10 kehrt nach einem Zeitraum t1 zu den im Schritt 350 abgespeicherten Koordinaten zurück, um erneut zu versuchen, von den ausgelassenen Regalflächen Abbildungen zu erstellen 360, ohne dabei auf ein Hindernis zu treffen.

Detektiert der Roboter 10 im Schritt 325, dass es sich um ein dynamisches Hindernis handelt, antizipiert der Roboter 10 mittels des Pfadplanungsmoduls 112 die Bewegungsrichtung und gleicht diese im Bewegungsplaner 115 mit seiner eigenen Pfadplanung ab (Schritt 330). Befindet sich das Hindernis demnach auf Kollisionskurs mit dem Roboter 10, reduziert dieser bspw. seine Geschwindigkeit und/oder sendet ein Warnsignal 335, bspw. einen Ton oder eine lichtbasierte Signalisierung (z.B. mittels der Alarmleuchten 126). Bei Fortsetzung des Kollisionskurses kann der Roboter 10 ausweichen (weiter mit Schritt 350 oder 355). Befindet sich das Hindernis dagegen gemäß Pfadplanung (Schritt 330) nicht auf Kollisionskurs, setzt der Roboter 10 seine Fahrt auf dem virtuellen Pfad fort 345.

In einem Aspekt wertet der Roboter 10 im oben beschriebenen Vorgehen zusätzlich aus, um was für eine Art von Hindernis es sich handelt. Hierbei kann eine Objekterkennung eingesetzt werden, wobei die Erkennung insbesondere fixe Hindernisse umfasst wie bspw. Transportwagen. Diese Objekterkennung kann einerseits bildbasiert erfolgen, andererseits auch andere Identifizierungsmechanismen wie RFID-Transponder, Barcodes, etc. umfassen, die auf beweglichen Hindernissen angebracht sind und deren Detektionsmechanismus im Stand der Technik beschrieben ist. Dabei kann bspw. ein Vergleich mit Mustern erfolgen. Weiterhin kann der Roboter 10 eine Sensorik nutzen, um zu detektieren, ob es sich beim Hindernis um eine Person handelt. Dabei wird bspw. eine Kamera genutzt, als 2D oder 3D-Kamera ausgestaltet, ggf. als RGB-D-Kamera. In einem Aspekt kann auch ein Radarsensor genutzt werden. Mittels dieser wird durch ein Personenerkennungsmodul 160 eine Personenerkennung vorgenommen, bspw. mittels im Stand der Technik vorhandene Frameworks wie OpenPose oder das Microsoft Kinect SDK. In einem Aspekt basieren diese auf einer Skeletterkennung. Wird ein Hindernis als eine Person erkannt, reduziert der Roboter seine Geschwindigkeit, fährt aber z.B. auf dem weiteren Weg bis zum Hindernis bzw. bis zu einem definierten Abstand zum Hindernis, der sich in einem Haltepunkt auf der Karte übersetzen lässt, bei dem der Roboter 10 spätestens stoppt, an den zuvor definierten Wegmarken weitere Aufnahmen des Regals an. Detektiert der Roboter 10, dass sich die Person aus dem Fahrbereich entfernt hat, setzt der Roboter 10 seine Fahrt über den definierten Haltepunkt hinweg fort. Handelt es sich dagegen um keine Person, ist die Wahrscheinlichkeit größer als bei der Person, dass sich das Hindernis über einen längeren Zeitpunkt dort befindet und er reduziert die oben genannte Wartezeit t.

In einem Aspekt kann sich das Hindernis, welches der Roboter 10 detektiert, so positioniert sein, dass es sich auf der gegenüberliegenden Seite des Regals befindet bzw. derart positioniert ist, dass der Roboter 10 das Hindernis passieren kann, ohne eine verdeckte Sicht auf das Regal zu haben, welches aufgezeichnet werden soll. Dies ist z.B. möglich, sofern es sich um ein statisches Hindernis handelt (Schritt 320) und die Wartezeit t überschritten wurde (Schritt 340). Eine entsprechende Auswertung über diesen notwendigen Raum zum Umfahren (Schritt 365) wird bspw. mittels Auswertung von Belegtheitskarten umgesetzt. In dem Falle kann der Roboter 10 dennoch Abbildungen vom Regal anfertigen. Dies macht eine Anpassung der Abbildungsaufzeichnungen 370 notwendig, bspw. des Erfassungswinkels 375, der Wegmarken 380 und/oder der Höhenverstellung 385 des Produktscan-Sensors 135. Dafür sind im Produkterfassungs- und Auswertungs-Modul 140 Regeln hinterlegt, die diese Parameter in Abhängigkeit vom Abstand zum Regal definieren. Wird bspw. der Ausschnittsbereich kleiner, der vom Regal mittels Produktscan-Sensor 135 aufgezeichnet wird, reduzieren sich die Abstände der Wegmarken in einem Aspekt derart, dass dennoch eine flächige Auswertung des Regals mit den aufgezeichneten Abbildungen des Regals möglich ist.

In einem Aspekt kann der Roboter 10 auch derart konfiguriert sein, dass er die Regalhöhe ermittelt 450. Diese Ermittlung der Regalhöhe wiederum kann einerseits mittels einer Abfrage aus einem Speicher (z.B. 4, 21) 410 erfolgen, in dem diese hinterlegt ist, oder aber durch eine sensorbasierte Höhenermittlung 415 erfolgen, bspw. mittels optischer Verfahren (kamerabasierte Auswertung der Erfassungswinkel, bspw. über Triangulation, usw.), Radar, usw. Dies kann dann zu den entsprechenden automatisierten Anpassungen der Route 420 des Roboters 10 führen und/oder zu einer Anpassung der Abbildungsaufzeichnungen 370 mittels Erfassungswinkelanpassung 375, Wegmarkenanpassung 380 und Höhenverstellungsanpassung 385 des Produktscan-Sensors 135. Dabei kann die Abbildung der Regalhöhe über das Zusammensetzen mehrerer, sich mindestens anteilig überlappende Abbildungen erfolgen.

### Beispiel 1: Weiterverarbeitung der Daten

Der Roboter 10 erfasst mittels zweier Produktscan-Sensoren 135, bei denen es sich um 2D-Digitalkameras handelt wie bspw. eine NIKON D750, Regale mit Produkten und Waren in einem Lager oder auf einer Verkaufsfläche. Dabei veranlasst das Produkterfassungs- und Auswertungs-Modul 140 die Übertragung der aufgezeichneten und im Bildspeicher 4 oder Systemspeicher 21 (des Roboters 10) zwischengespeicherten Bilder über die Cloud 25 an ein externes System 24, welches die Bilder weiter prozessiert und mittels im Stand der Technik beschriebener Bilderkennungsverfahren auswertet. Dabei findet eine Bildsegmentierung auf unterschiedlichen Ebenen statt: a) werden Produkte und Regale unterschieden, b) werden unterschiedliche Produktarten unterschieden (bspw. Dosen mit verschiedenen Inhalten, erkennbar an sich unterscheidenden Beschriftungen oder Formen, und c) die Anzahl unterschiedlicher Produkte. Dabei werden, wie im Stand der Technik ebenfalls beschrieben wurde, auch Regallücken erkannt. Das externe System 24 (oder wiederum ein mit diesem System verbundenes System) verfügt über in einem Speicher (21, 23) abgelegte Regeln, die es bspw. erlauben, basierend auf detektierten Regallücken und ggf. damit verbundenen Schwellwerten Benachrichtigungen zu initiieren, um ein Wiederauffüllen der Regallücken anzutriggern. Bei den Schwellwerten kann es sich bspw. um eine detektierte Anzahl an Produkten einer Sorte handeln, so dass bspw., wenn weniger als 3 Produkte der Sorte im Regal identifiziert wurden, eine Benachrichtigung zum Wiederauffüllen getriggert wird. Eine Darstellung von detektierten Regallücken, etc. ist über das Terminal 26 möglich.

### Beispiel 2: Abbildungserstellung

Die Abbildungserstellung wird hier durch die folgenden Aspekte APE1-APE11 charakterisiert:
APE1. Computer-implementiertes Verfahren zur Erstellung einer Abbildung von mindestens einem Regal, einem Produkt und/oder einer Ware, umfassend
   - Erstellung von mindestens einer Abbildung von mindestens einem Regal, Produkt und/oder einer Ware entlang eines virtuellen Pfads;
   - Detektion von Hindernissen auf dem virtuellen Pfad;
   - Klassifizierung der Hindernisse in statische Hindernisse und dynamische Hindernisse,
   wobei die Erstellung der mindestens einen Abbildung innerhalb von definierten Zeitintervallen und/oder an Wegmarken erfolgt.
APE2. Computer-implementiertes Verfahren nach APE1, weiter umfassend bei Detektion eines statischen Hindernisses
   - Abspeichern der Koordinaten des statischen Hindernisses;
   - Abweichung vom virtuellen Pfad;
   - Erneute Hindernisauswertung an den abgespeicherten Koordinaten nach einem definierten Zeitraum.
APE3. Computer-implementiertes Verfahren nach APE1, wobei die Erstellung der Abbildungen an Wegmarken erfolgt.
APE4. Computer-implementiertes Verfahren nach APE3, wobei es sich bei den Wegmarken um virtuelle, in einer digitalen Karte vermerkte Wegmarken handelt.
APE5. Computer-implementiertes Verfahren nach APE1,
   - Ermittlung der Distanz zwischen einem erfassten Hindernis auf dem virtuellen Pfad und dem abzubildenden mindestens einen Regal, Produkt und/oder Ware;
   - Vergleich der ermittelten Distanz mit einem Schwellwert;
   - Neuplanung des virtuellen Pfads in Abhängigkeit vom Schwellwert derart, dass der neu geplante virtuelle Pfad zwischen dem erfassten Hindernis und dem mindestens einen abzubildenden Regal, Produkt und/oder Ware verläuft.
APE6. Computer-implementiertes Verfahren nach APE3 und/oder APE5, weiter umfassend
   - Anpassung der Erfassungswinkel zur Erfassung des mindestens einen Regals, Produkts und/oder Ware;
   - Anpassung der Erfassungshöhe zur Erfassung des mindestens einen Regals, Produkts und/oder Ware und/oder
   - Anpassung der Distanz zwischen den Wegmarken auf dem virtuellen Pfad.
APE7. Computer-implementiertes Verfahren nach APE6, wobei die Anpassung der Erfassungswinkel eine Vergrößerung der Erfassungswinkel umfasst und/oder die Anpassung der Distanz zwischen den Wegmarken eine Reduktion der Distanzen.
APE8. Computer-implementiertes Verfahren nach APE6, weiter umfassend die Erhöhung der Erstellungsanzahl der Abbildungen pro Wegmarke.
APE9. Computer-implementiertes Verfahren nach APE6 und/oder APE7, wobei die Anpassungen jeweils in Abhängigkeit der Distanz des virtuellen Pfads zu dem mindestens einen zu erfassenden Regals, Produkts und/oder Ware und/oder der Höhe des mindestens einen Regal, Produkts und/oder Ware erfolgt.
APE10. Computer-implementiertes Verfahren nach APE9, wobei die Höhe des mindestens einen Regals, Produkts und/oder Ware in einem Speicher (z.B. 21) hinterlegt ist.
APE11. Computer-implementiertes Verfahren nach APE9, wobei die Höhe des mindestens einen Regals, Produkts und/oder Ware während des Zurücklegens des virtuellen Pfads ermittelt wird.
APE12. Vorrichtung nach APE1-APE11.

### Beispiel 3: Pfadplanung

Die Pfadplanung wird hier durch die folgenden Aspekte AP1-AP7 charakterisiert:
APP1. Computer-implementiertes Verfahren zur Pfadplanung eines Roboters (10), umfassend
   - Detektion von Hindernissen auf dem virtuellen Pfad;
   - Auswertung der Hindernisse;
   - Entscheidung, ob Ausweichen und
      im Fall einer Entscheidung für das Ausweichen:
   - Abspeichern der Koordinaten des Hindernisses;
   - Neuplanung eines virtuellen Pfads;
   - Erneute Hindernisauswertung an den abgespeicherten Koordinaten nach einem definierten Zeitraum.
APP2: Computer-implementiertes Verfahren nach APP1, wobei die Hinderniserfassung zwischen definierten Wegmarken erfolgt.
APP3: Computer-implementiertes Verfahren nach APP2, weiter umfassend die Neuplanung der definierten Wegmarken bei Neuplanung des virtuellen Pfads.
APP4 Computer-implementiertes Verfahren nach APP3, wobei sich die Zahl der Wegmarken erhöht, wenn der neu geplante Pfad dichter an einem vom Roboter (10) zu erfassenden Bereich verläuft.
APP5 Computer-implementiertes Verfahren nach APP1, wobei die Neuplanung des virtuellen Pfads in Abhängigkeit der Höhe eines zu erfassenden Bereichs erfolgt.
APP6 Computer-implementiertes Verfahren nach APP5, umfassend die Ermittlung der Höhe des zu erfassenden Bereichs.
APP7. Vorrichtung zur Durchführung des Verfahrens nach APP1-APP6.

### Beispiel 4: Metadaten-Auswertung

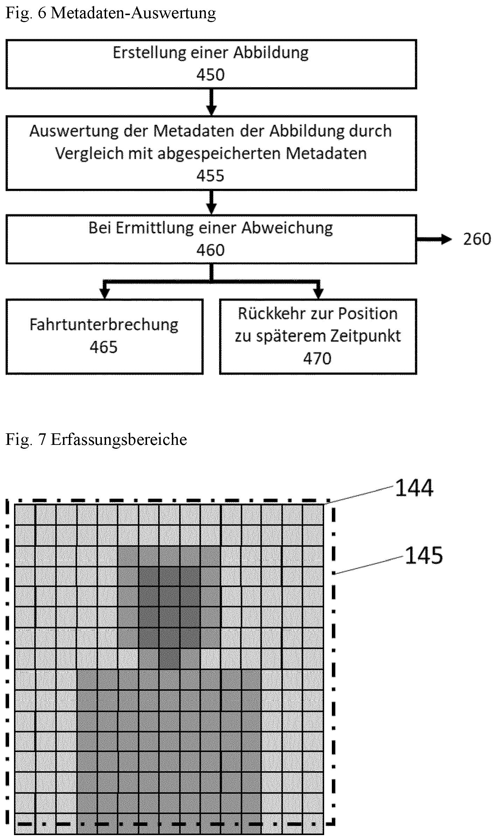

In einem Aspekt folgt der Roboter 10 dem virtuellen Pfad durch ein Areal und erfasst an jeweils definierten Wegmarken auf dem virtuellen Pfad mit dem Produktscan-Sensor 135 Regale, Produkte und/oder Waren, d.h. er erstellt eine Abbildung (Schritt 450 in Fig. 6). Im Speicher (4 oder 21) sind pro Wegmarke Parameter hinterlegt, die aus Metadaten einer erstellten Abbildung stammen. Bei diesen Metadaten kann es sich bspw., wenn als Produktscan-Sensor 135 eine Kamera zum Einsatz kam, um Informationen zur genutzten Blende handeln. Erstellt der Roboter 10 nun an Wegmarken des virtuellen Pfads Abbildungen der Regale, Produkte und/oder Waren, so werden die Metadaten der Abbildungen hinsichtlich der verwendeten Parameter ausgewertet (Schritt 455), darunter bspw. auch die Informationen zur genutzten Blende. Es erfolgt ein Vergleich der im Speicher (4, 21) hinterlegten Parameter mit den durch die erzeugte Abbildung generierten Parametern. Es erfolgt eine Ermittlung von Abweichungen (Schritt 460) und, sofern eine Abweichung detektiert wird, bspw. unterschiedliche Werte für die genutzte Blende, Distanzintervall der Scharfstellung des Bilds, die Autofokus-Distanz, impliziert dies eine Abweichung in der vom Produktscan-Sensor 135 genutzten Fokussierung. Diese Abweichung in der Fokussierung kann darauf hindeuten, dass sich ein Hindernis zwischen dem Produktscan-Sensor 135 und den abzubildenden Regalen, Produkten und/oder Waren befunden hat, welches die abzubildenden Regalen, Produkten und/oder Waren mindestens anteilig bedeckt. Im Schritt 465 kann dann eine Unterbrechung der Fahrt erfolgen und nach einer definierten Zeit eine erneute Erstellung einer Abbildung 450. Alternativ kann der Roboter 10 seine Fahrt fortsetzen, jedoch zu einem späteren Zeitpunkt zur Wegmarke zurückkehren (was bspw. das Abspeichern der Wegmarke mit einem entsprechenden Code beinhalten kann), um dann erneut eine Erstellung einer Abbildung 450 vorzunehmen. Nach Schritt 460 kann auch Schritt 260 erfolgen, d.h. eine Post-Prozessierung der Abbildung. In einem Aspekt kann der Schritt 455 in Abhängigkeit davon erfolgen, ob der Roboter 10 ein Hindernis in seinem Umfeld detektiert hat, das sich bspw. innerhalb eines definierten Abstands zum virtuellen Pfad befindet.

Dies wird durch die Aspekte AMA1-AMA6 näher beschrieben:
AMA1. Computer-implementiertes Verfahren zur Pfadplanung eines Roboters (10), umfassend
   - Abfahren eines virtuellen Pfads;
   - Erstellung von mindestens einer Abbildung an einer Wegmarke;
   - Extraktion der Metadaten der mindestens einen Abbildung;
   - Vergleich der Metadatendaten der mindestens einen Abbildung mit Metadaten von der gleichen Wegmarke und in Abhängigkeit vom Vergleich und
   - Anpassung des Fahrtverlaufs des Roboters (10).
AMA2. Computer-implementiertes Verfahren nach AMA1, wobei eine Anpassung des Fahrtverlaufs des Roboters (10) eine Fahrtunterbrechung oder eine Rückkehr zur Wegmarke zu einem späteren Zeitpunkt umfasst.
AMA3. Computer-implementiertes Verfahren nach AMA1, wobei die Metadaten Informationen zur Blende, der Autofokus-Distanz oder des scharfgestellten Bereichs beinhalten.
AMA4. Computer-implementiertes Verfahren nach AMA1, weiter umfassend
   - Auswertung der Abbildung hinsichtlich enthaltener Gesichter einer Person und
   - Unkenntlichmachen der erfassten Gesichter innerhalb der erzeugten Abbildungen.
AMA5. Computer-implementiertes Verfahren nach AMA1, wobei der Metadatenvergleich nach Detektion von Hindernissen erfolgt, die innerhalb eines definierten Abstands zum virtuellen Pfad erfasst wurden.
AMA6. Vorrichtung zur Durchführung des Verfahrens nach AMA1-AMA6.

### Beispiel 5: Wärmebildbasierte anonyme Personendetektion

Die soweit beschrieben Verfahren zur Auswertung erstellter Bilder mit dem Ziel der Personendetektion haben den Nachteil, dass dafür einerseits Rechenaufwände betrieben werden müssen, andererseits bereits personenbezogene Daten zumindest lokal verarbeitet werden. Stattdessen wird in einem Aspekt eine Personendetektion vorgenommen, die nur einen geringen Rechenaufwand verlangt und zugleich eine Personendetektion ohne Verarbeitung personenbezogener Daten darstellt. Diese Implementierung sieht mindestens als Hindernissensor 128 einen Wärmesensor 142 pro Produktscan-Sensor 135 (z.B. einer Kamera 125) vor, dessen Erfassungsbereich mit dem Erfassungsbereich überlappt, der als Bild aufgezeichnet werden soll. D.h. es kann sich beim Wärmesensor 142 in einem Aspekt um einen Wärmebildsensor 143 handeln. Fig. 7 illustriert dies. Der Erfassungsbereich 145 des Produktscan-Sensors 135 überlappt mit dem Erfassungsbereich des Wärmebildsensormatrix 144, wobei die einzelnen Matrixelemente (z.B. Pixel) jeweils eine gemessene Strahlungsintensität darstellen, die zumeist farblich bzw. in unterschiedlichen Graustufen dargestellt wird. Fig. 7 zeigt an dieser Stelle eine erfasste Person, mit dem nicht bedeckten Gesicht in höherer Intensität (dunklere Graustufen). Da ein Produktscan-Sensor 135 in einem Aspekt einen breiten Erfassungswinkel hat, weist in einem Aspekt der Wärmesensor 142 bzw. Wärmebildsensor 143 ebenfalls einen weiten Erfassungswinkel auf, bspw. mindestens 50° in horizontaler und vertikaler Richtung aufweist, wobei auch deutlich weitwinkligere Wärmesensoren 142 bzw. Wärmebildsensoren 143 zum Einsatz kommen können, was ggf. die Anzahl der genutzten Wärmesensoren 142 bzw. Wärmebildsensoren 143 reduzieren kann. Um Personen als solche zu erfassen, jedoch dabei keine personenbezogenen Daten zu verarbeiten, wird bspw. ein Wärmebildsensor 143 gewählt, der in der üblichen Erfassungsdistanz eine Auflösung hat, die so gering ist, dass durch die geringe Auflösung keine personenbezogenen Daten erfasst werden können. Hierbei kann eine Auflösung von unter 80 Pixel in einer Sensordimension zum Einsatz kommen, in einem Aspekt auch deutlich weniger, bspw. weniger als die Hälfte an Pixeln je Dimension. In einem Aspekt wird als Wärmebildsensor 143 ein Lepton 2.5, 80 x 60, 50° eingesetzt. In einem Aspekt ist der Wärmesensor 142 bzw. Wärmebildsensor 143 nahe des Produktscan-Sensor 135 (z.B. einer Kamera 125) positioniert, bspw. innerhalb eines Abstands von 20 cm. Je nach genutztem Sensor kann die Anzahl von erfassten Aufzeichnungen der Strahlungsintensität bei 3-20 Abbildungen pro Sekunde liegen.

Die Auswertung basiert auf einer Erfassung weiter Teile des Produktscan-Sensor 135 - Erfassungsbereichs durch den Wärmesensor. Der Wärmesensor 142, wenn es sich um ein Wärmebildsensor 143 handelt, generiert eine Bildmatrix entsprechend der Sensorauflösung. Dabei löst jedes Matrixelement, d.h. jeder Pixel, die gemessene Strahlungsintensität aus. Diese Intensitätswerte werden in einen Temperaturwert konvertiert, der eine bessere Auswertung ermöglicht, z.B. mittels Programmiercode in Python. Die gemessenen Temperaturen werden entsprechend bewertet. Dies beinhaltet bspw. eine Bewertung innerhalb eines Temperaturfensters. Dieses Temperaturfenster definiert Unter- und Obergrenzen, die sich bspw. aus der Umgebungstemperatur, der Körpertemperatur einer Person sowie bspw. auch saisonalen Effekten ergeben. Die Obergrenze liegt im Bereich der üblichen Körpertemperatur bzw. einige Grad darüber. Die Untergrenze liegt um 20° C herum, mit saisonalen Zu- und Abschlägen. So kann sie im Sommer bspw. bei ca. 25°C liegen, im Winter bei 15-20°C. Die saisonalen Effekte führen bspw. dazu, dass eine erfasste Person unterschiedlich stark isolierende Bekleidung trägt, die einen Teil der von der Person emittierten Wärmestrahlung abschirmt und damit die erfasste Temperatur herabsetzt. So ist bspw. die sensorisch erfasste absolute Wärmestrahlung, die eine Person in einem T-Shirt abgibt, höher als die sensorisch erfasste, absolute Wärmestrahlung, die eine Person in einer Jacke abgibt.

Wird nun ein Matrixelement bzw. Bildelement bzw. Pixel innerhalb des Temperaturfensters detektiert, wird dieser für die weiterführende Auswertung berücksichtigt.

Dies kann einerseits die Auswertung der Anzahl detektierter Matrixelemente bzw. Pixel umfassen, bspw. in Relation zur Gesamtzahl an Matrixelementen bzw. Pixeln, wobei dieses Verhältnis die Sensitivität angibt, wie stark ein Bildausschnitt durch eine Person verdeckt wird. Hier können bspw. Werte zwischen 5 und 15% gewählt werden, ab denen eine Personenaufzeichnung durch Verzicht auf eine sensorische Erfassung der Produkte, Waren und/oder Regale unterbunden werden soll.

In einem Aspekt können auf Basis eines Wärmebildsensors 143 mit einer höheren Auflösung wie bspw. die genannten 80 x 60 Pixel die erfassten Daten klassifiziert werden, wobei ein neuronales Netzwerk als Klassifikator dienen kann, wie bspw. im Stand der Technik beschrieben ist (siehe z.B. DOI: 10.1117/12.2241858 oder DOI: 10.1109/IJCNN.2018.8489465). Diese Klassifikation kann Personen und/oder Personenelemente beinhalten und von anderen, erfassten Objekten unterscheiden. In diesem Fall kann der Verzicht auf eine sensorische Erfassung der Produkte, Waren und/oder Regale durch die Klassifizierung vorgegeben werden.

Wird nun wie beschrieben eine Person durch den Wärmesensor 142 bzw. Wärmebildsensor 143 detektiert und dementsprechend kein Abbild von Produkten, Waren und/oder Regalen erstellt, wird die Abbildungserstellung an der Position um eine Wartezeit verzögert, bis erneut eine Auswertung stattfindet, ob sich ein Hindernis zwischen Produktscan-Sensor 135 und den abzubildenden Gegenständen befindet. Alternativ und/oder ergänzend wird eine Position in einem Speicher abgelegt (21, 23). Dies kann z.B. die Position der mobilen Basis 1 sein. Es kann sich aber auch um eine ungefähre Position handeln und/oder die Position eines Regals (welches bspw. auf anderem Wege als über eine direkte Position assoziiert ist, bspw. derart, dass im Speicher (21, 23) hinterlegt ist, von welchem Regal Abbildungen erstellt werden sollen, und bei Personendetektion die Abbildungserstellung bzgl. des Regals unterbrochen wird. Dieses Regal wiederum kann in einer Karte hinterlegt sein. Zu einem späteren Zeitpunkt kann erneut der sensorische Erfassungsbereich des Produktscan-Sensors 135 wie beschrieben ausgewertet werden, um erneut einen Aufzeichnungsversuch zu unternehmen. Das Zeitfenster bis zu diesem Zeitpunkt kann durch verschiedene Aspekte festgelegt sein, bspw. kann es fix sein, es kann von der weiteren, umfeldabhängigen Route abhängen (z.B. derart, dass nach Erfassung eines Folgeregals erneut das Regal mit der Person im Abbildungsbereich ausgewertet wird, wobei damit die Zeitdauer abhängig ist bspw. von der Erfassungsgeschwindigkeit, Regallänge und/oder zurückzulegender Distanz.

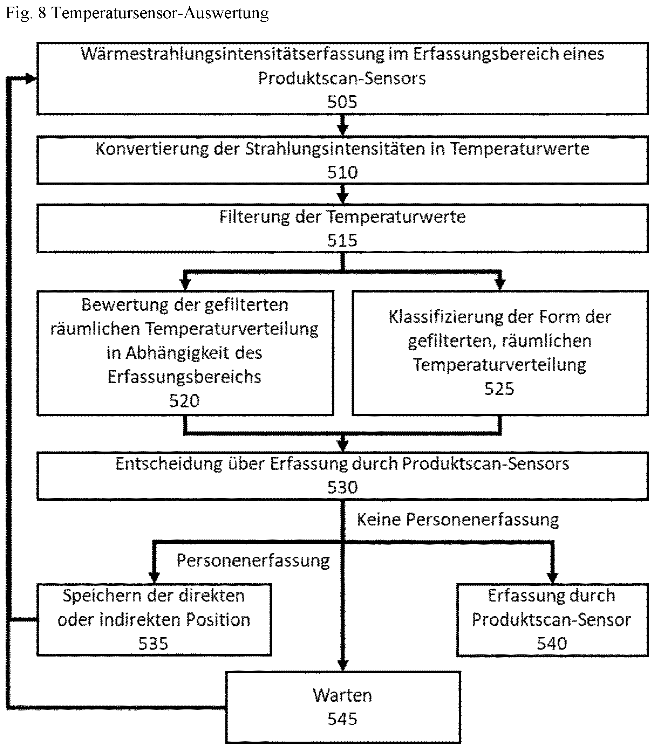

Die Auswertung wird wie in Fig. 8 dargestellt zusammengefasst: Wärmestrahlungsintensitätserfassung im Erfassungsbereich eines Produktscan-Sensors 135 (Schritt 505), wobei ein Wärmesensor 142 zum Einsatz kommt wie bspw. ein Wärmebildsensor 143. Konvertierung der Strahlungsintensitäten in Temperaturwerte (Schritt 510). Filterung der Temperaturwerte (Schritt 515), bspw. in Abhängigkeit vom Temperaturbereich. Dabei kann ein Temperaturfenster im Bereich von 10 bis 45°C gewählt werden, wobei dieses auch enger sein kann und wobei die untere Grenze bspw. saisonal abhängig ist und in der kälteren Jahreszeit tiefer liegen kann als in der wärmeren Jahreszeit. Dabei werden bspw. nur solche Bildelemente wie Pixel ausgewertet, die in dieses Temperaturfenster fallen. In einem Aspekt erfolgt eine Bewertung der gefilterten räumlichen Temperaturverteilung in Abhängigkeit des Erfassungsbereichs (Schritt 520). Hierbei wird bspw. die Anzahl der erfassten Bildelemente wie Pixel zur Gesamtzahl aller Pixel ausgewertet. Die Entscheidung über die Erfassung von Produkten, Waren und/oder Regalen durch den Produktscan-Sensor 135 im Schritt 530 erfolgt dann auf Basis eines Schwellwertvergleichs. In einem alternativen und/oder ergänzenden Aspekt erfolgt eine Klassifizierung der Form der gefilterten, räumlichen Temperaturverteilung (Schritt 525). Diese Klassifizierung kann unter Nutzung von Verfahren der Mustererkennung wie neuronaler Netze solche Muster detektieren, die Personen zugeordnet werden können. Die Entscheidung über die Erfassung von Produkten, Waren und/oder Regalen durch den Produktscan-Sensor 135 im Schritt 530 erfolgt dann auf Basis der Klassifizierung. Wird durch das Verfahren keine Personenerfassung vorgenommen, erfolgt eine Erfassung der Produkte, Waren und/oder Regale durch den Produktscan-Sensor 135 (Schritt 540). Andernfalls erfolgt nach einer Wartezeit t erneut eine Auswertung (Schritt 545) und/oder es wird die Position direkt oder indirekt abgespeichert (Schritt 535) und es erfolgt zu einem späteren Zeitpunkt erneut eine sensorische Erfassung und Auswertung der Schritte 505 fortfolgende. Alternativ zur Umwandlung der erfassten Strahlungsintensitäten in Temperaturen kann auch eine andere Klassifikation genutzt werden, um Erfassungsintervalle abzubilden.

### Beispiel 6. Hindernisdetektion

Die Hindernisdetektion und Auswertung wird wie in AHA1-AH25 charakterisiert:
AHA1. Computer-implementiertes Verfahren zur Erstellung eines Profils von Regalen, Produkten und/oder Waren, umfassend
   - Generierung von mindestens einer Abbildung von mindestens einem Regal, Produkt und/oder einer Ware,
   - Abtasten des Bereichs zwischen dem die Abbildung generierenden Sensor und dem abzubildenden Regal, Produkt und/oder Ware;
   - Detektion von mindestens einem Hindernis, das vom die Abbildung generierenden Sensor aus einen Teil der in der Abbildung darzustellenden Regal, Produkt und/oder Ware verdeckt, wobei
   die Detektion des mindestens einen Hindernisses über einen Hindernissensor (128) erfolgt.
AHA2. Computer-implementiertes Verfahren nach AHA1, wobei der mindestens eine Hindernissensor (128) die Distanz zum abzubildenden Regal, Produkt und/oder Ware erfasst und mit hinterlegten Werten vergleicht.
AHA3. Computer-implementiertes Verfahren nach AHA1, wobei der Hindernissensor (128) Bewegungen von Objekten erfasst und eine erfasste Bewegung als Hindernis klassifiziert.
AHA4. Computer-implementiertes Verfahren nach AHA1, wobei der Hindernissensor (128) oder der die Abbildung generierende Sensor die erfassten Daten durch einen Vergleich mit Mustern auswertet und auf Basis des Mustervergleichs Hindernisse detektiert.
AHA5. Computer-implementiertes Verfahren nach AHA1, wobei der Hindernissensor (128) die Temperatur von Hindernissen auswertet, welche innerhalb eines Temperaturbereichs zwischen der Körpertemperatur des Menschen und der Umgebungstemperatur liegt.
AHA6. Computer-implementiertes Verfahren nach AHA1, weiter umfassend die Verzögerung der Erstellung der Abbildung, bis kein Hindernis mehr detektiert wird.
AHA7. Computer-implementiertes Verfahren nach AHA1, weiter umfassend die Vergabe eines Codes für die Abbildung beim Erstellen der Abbildung.
AHA8. Computer-implementiertes Verfahren nach AHA7, weiter umfassend eine Post-Prozessierung der Abbildung basierend auf dem Code.
AHA9. Computer-implementiertes Verfahren nach AHA1, weiter umfassend eine Unterbrechung der Profilerstellung bei Detektion eines Hindernisses.
AHA10. Computer-implementiertes Verfahren nach AHA1, weiter umfassend
   - Abspeichern der Position, auf der das Hindernis detektiert wird und
   - Erneutes Abtasten auf Hindernisse von der abspeicherten Position zu einem späteren Zeitpunkt.
AHA11. Computer-implementiertes Verfahren nach AHA8, wobei die Post-Prozessierung umfasst
   - Auswertung der Abbildung hinsichtlich enthaltener Gesichter einer Person
   - Unkenntlichmachen der erfassten Gesichter innerhalb der erzeugten Abbildungen.
AHA12. Computer-implementiertes Verfahren nach AHA1, wobei das Abtasten während des Zurücklegens eines virtuellen Pfads erfolgt.
AHA13. Computer-implementiertes Verfahren nach AHA1, weiter umfassend die Konvertierung der mindestens einen erstellten Abbildung in ein Planogramm.
AHA14. Computer-implementiertes Verfahren nach AHA1, weiter umfassend die Bewertung der Abbildungsqualität durch einen Vergleich verschiedener Segmente der gleichen Abbildung.
AHA15. Computer-implementiertes Verfahren nach AHA1, weiter umfassend die Bewertung der Abbildungsqualität durch einen Vergleich sich überlappender Abbildungen.
AHA16. Vorrichtung nach einem der AHA1-AHA15.
AHA17. System zur Erstellung mindestens einer Abbildung, umfassend eine mobile Basis (1), einen Aufbau (5), ein Navigationsmodul (110), einen Produktscan-Sensor (135) zur Erzeugung von Abbildungen.
AHA18. System nach AHA17, weiter umfassend einen Hindernissensor (128) zur Erfassung von Objekten, die die abzubildenden Objekte aus Perspektive des Produktscan-Sensors (135) mindestens anteilig verdecken.
AHA19. System nach AHA17, wobei es sich um einen Roboter (10) handelt.
AHA20. System nach AHA18, wobei die Erfassungsbereiche des Produktscan-Sensor 135 zum Erfassen von Abbildungen und des Hindernissensors (128) überlappen.
AHA21. System nach AHA18, umfassend Regeln in einem Speicher (21) zur Ermittlung der Distanz zwischen dem Hindernissensor (128) und detektierten Hindernissen, der Ermittlung von Bewegungen durch den Hindernissensor (128) und/oder dem Vergleich erfasster Objekte mit Mustern.
AHA22. System nach AHA18, umfassend Regeln im Speicher (21) zur Fahrtunterbrechung während der Detektion von Hindernissen durch den Hindernissensor (128) oder dem Abspeichern von erzeugten Abbildungen unter Ergänzung eines Codes und der Positionsdaten des Systems.
AHA23. System nach AHA17, umfassend ferner Regeln im Speicher (21) zur Gesichtserkennung und zum Unkenntlichmachen erkannter Gesichter.
AHA24. System nach AHA17, umfassend ferner Regeln im Speicher (21) zur Evaluation der Abbildungsqualität, wobei die Abbildungsqualität durch einen Vergleich von Arealen der gleichen Abbildung vorgenommen wird.
AHA25. System nach AHA17, umfassend ferner Regeln im Speicher (21) zur Evaluation der Qualität erstellter Abbildungen, wobei die Abbildungsqualität durch einen Vergleich von mindestens zweier, sich überlappender Abbildung vorgenommen wird.

### Beispiel 7: automatisierte Positionierung zur Qualitätsoptimierung

Der Ablauf zu einer automatisierten Positionierung zur Qualitätsoptimierung bei der Erstellung von Abbildungen von Produkten, Waren und/oder Regalen ist in Fig. 8 illustriert. Im Schritt 605 erfolgt die Erstellung einer ersten Abbildung an einer definierten Position. Bei dieser Position handelt es sich um eine Wegmarke auf dem Pfad des Roboters 10, an der durch den Produktscan-Sensor 135 eine Abbildung erstellt wird. Dieser Pfad kann in einem Aspekt parallel zur Oberfläche von Produkten und/oder Regalen verlaufen. Der Produktscan-Sensor 135 kann dabei eine definierte vertikale Position und/oder einen definierten Winkel aufweisen. Im Schritt 610 erfolgt eine Auswertung von Qualitätsparametern der Abbildung 610. Dies bedeutet bspw. die Detektion von Reflexionen und/oder einer nicht einheitlichen Ausleuchtung des abzubildenden Bereichs. Dabei kann bspw. homomorphe Filterung zum Einsatz kommen, wobei die Qualität durch Vergleich eines gefilterten mit einem ungefilterten Bild bewertet wird. Die homomorphe Filterung erfolgt bspw. durch Logarithmierung der Bilddaten, einer Hochpassfilterung mittels schneller Fouriertransformation in der Frequenzdomain (z.B. mit einem Gaußschen Filter), gefolgt von einer Transformation der Daten mittels einer Exponentialfunktion, wodurch z.B. ungleichmüßige Beleuchtungen korrigiert werden. In einem Aspekt kann die ermittelte Qualität mit einem Schwellwert verglichen werden und die Folgeschritte erfolgen nur dann, wenn der Schwellwert überschritten wird. Anschließend erfolgt eine Variation der Abbildungserstellungsposition 615, bspw. beim nächsten Durchlauf des Roboters 10 durch ein Areal mit abzubildenden Produkten, Waren und/oder Regalen. Diese Variation der Position kann eine andere vertikale Position des Produktscan-Sensors 135 umfassen (einzustellen über die Produktscan-Sensor-Höhenverstellung 136), einen anderen Erfassungswinkel des Produktscan-Sensors 135 oder eine andere Stelle auf dem virtuellen Pfad des Roboters 10, der in einem Aspekt unverändert zum vorangegangenen Pfad sein kann, in einem alternativen Aspekt eine andere Distanz zur Oberfläche der Produkte und/oder Regal aufweist. An dieser neuen Position erfolgt die Erstellung einer zweiten Abbildung 620, die mit Blick auf die abgebildeten Motive räumlich im Wesentlichen mit der ersten Abbildung überlappt. Es erfolgt eine Auswertung der Qualitätsparameter der zweiten Abbildung 625 sowie ein Vergleich der Qualitätsparameter der ersten und zweiten Abbildung 630. Anschließend wird die Position als Wegmarke und/oder Produktscan-Sensor-Position bzw. -Orientierung festgelegt, die den besseren Qualitätsparameter aufweist 635. In einem Aspekt kann der Ablauf erneut im Schritt 605 beginnen und der Prozess so lange durchlaufen werden, bis im Qualitätsparametervergleich eine Qualitätsdifferenz zwischen zwei Abbildungen unter einem Schwellwert liegt 640. Dabei kann der Schwellwert für die Qualitätsparameterdifferenz bspw. 3% betragen.

Nachfolgend ist der Ablauf der Positionierung eines Produktscan-Sensors 135 wie folgt in den Aspekten APQ1-APQ14 beschrieben:
APQ1. Verfahren zur Positionierung eines Produktscan-Sensors (135), umfassend
   - Erstellung einer ersten Abbildung an einer definierten Position;
   - Auswertung von Qualitätsparametern der Abbildung;
   - Variation der Abbildungserstellungsposition;
   - Erstellung einer zweiten Abbildung an einer neuen Position;
   - Vergleich der Qualitätsparameter beider Abbildungen und
   - Festlegung auf die Position von beiden Positionen mit den besseren Qualitätsparametern.
APQ2. Verfahren nach APQ1, wobei die Abbildung Waren, Produkte und/oder Regale umfasst.
APQ3. Verfahren nach APQ1, wobei die Position die vertikale Position eines Produktscan-Sensors (135) umfasst.
APQ4. Verfahren nach APQ1, wobei die Position die Position auf einer virtuellen Linie parallel zu Produktoberflächen und/oder Regalen umfasst.
APQ5. Verfahren nach APQ1, wobei die Position die Position auf einem Pfad eines Roboters umfasst.
APQ6. Verfahren nach APQ1, wobei die Qualitätsparameter Reflexionen, Ausleuchtung, Schärfe usw. umfassen.
APQ7. Verfahren nach APQ1, wobei die Variation der Abbildungserstellungsposition eine Variation in der vertikalen Position des Produktscan-Sensors (135) umfasst.
APQ8. Verfahren nach APQ1, wobei die Variation der Abbildungserstellungsposition eine Variation auf einer virtuellen Linie umfasst, die in etwa parallel zu Produktoberflächen und/oder Regalen verläuft.
APQ9. Verfahren nach APQ1, wobei das Festlegen auf die Position mit besseren Qualitätsparametern Wegmarken eines Roboters (10) definiert.
APQ10. Verfahren nach APQ1, wobei die Abbildungserstellung an der ersten Position während eines ersten Durchlaufs des Roboters durch ein Areal erfolgt.
APQ11. Verfahren nach APQ1, wobei die Abbildungserstellung an der neuen Position während eines weiteren Durchlaufs des Roboters (10) durch ein Areal erfolgt.
APQ12. Verfahren nach APQ1, wobei die Auswertung von Qualitätsparametern der ersten Position einen Vergleich von Qualitätsparametern einer Abbildung mit einem Schwellwert umfasst.
APQ13. Verfahren nach APQ1-APQ12, welches so lange durchlaufen wird, bis im Qualitätsparametervergleich zwischen beiden Abbildungen ein Schwellwert unterschritten wird.
APQ14. Vorrichtung zur Durchführung des Verfahrens nach APQ1-APQ13.

### Beispiel 8: Regallückenerkennung

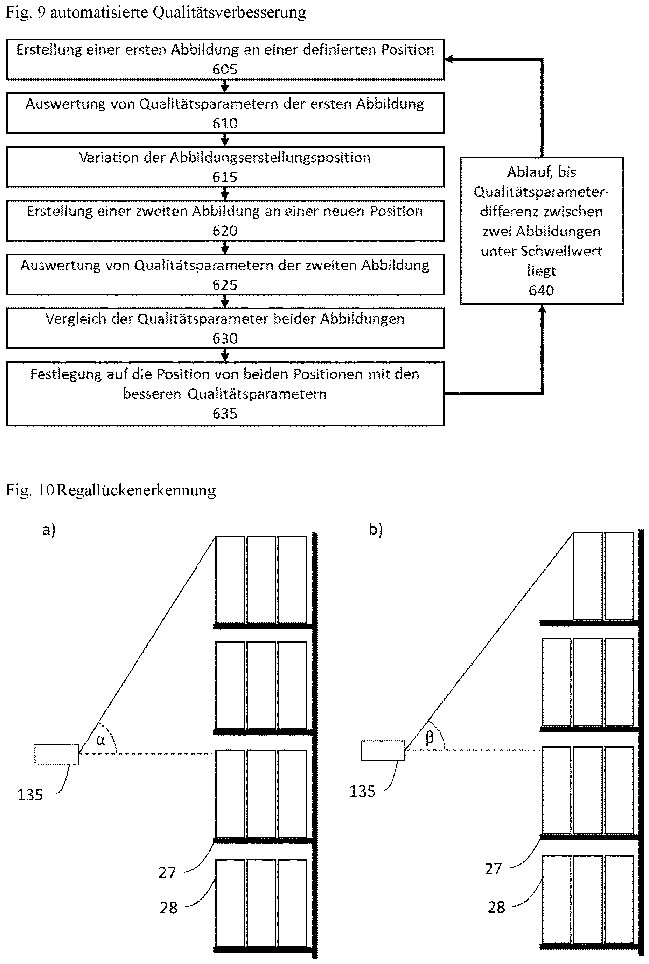

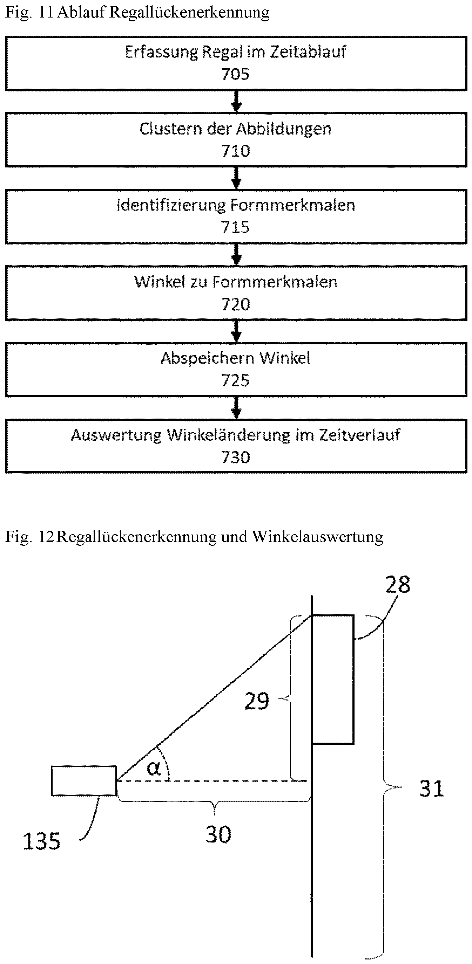

In einem Aspekt ist der Roboter 10 oder ein externes System 24 (das bspw. über eine Schnittstelle 130 mit dem Roboter 10 verbunden ist) in der Lage, aus vom Produktscan-Sensor 135 erstellten Abbildungen Regallücken zu erkennen. Unter einer Regallücke wird bspw. verstanden, dass ein Produkt 28 nicht so weit vorne an der Kante eines Regals 27 steht wie üblich. Fig. 10 illustriert dies. In Fig. 10a) befindet sich das Produkt 28 in der obersten Regalebene vorne an der Kante. Vom Produktscan-Sensor 135 aus gesehen hat der Winkel zur vorderen, oberen Kante des Produkts den Winkel α. In fig. 10 b) dagegen befindet sich das vordere Produkt 28 in der oberen Regalreihe weiter hinten im Regal, es fehlt hier ein Produkt 28 ganz vorne. Der Winkel vom Produktscan-Sensor 135 aus ist hier β, und in dem Fall ist β < α. Je nach Regalebene kann das Winkelverhältnis anders sein. Es muss auch nicht immer die obere Kante eines Produkts 28 ausgewertet werden, denn wenn sich bspw. Produkte weiter hinten im Regal 27 befinden und der Regalboden auf einer Höhe, die niedriger ist als die Höhe des Produktscan-Sensors 135, kann ggf. die Unterkante des Produkts besser erkannt werden als die Oberkante, welche ggf. im "Schatten" des darüberliegenden Regalbodens liegt. Der Ablauf zur Auswertung ist in Fig. 11 dargelegt: Im Schritt 705 erfolgt eine Erfassung des Regals 28 mittels des Produktscan-Sensors 135 im Zeitverlauf. Dies bedeutet u.a., dass mindestens eine Erfassung mit einem Produkt 28 an der vorderen Kante 27 erfolgt. Darauf basierend erfolgt ein Clustering der Abbildungen 710 mit dem Zwecke der Objekterkennung, wozu im Stand der Technik beschriebene Clusterverfahren zum Einsatz kommen, bspw. Faster-R-CNN-Algorithmen in PyTorch. Darüber lassen sich einzelne Produkte 28 und Produktaggregationen identifizieren. Dabei werden Formmerkmale der Produkte 28 erfasst 715, bspw. Kanten, Schriftzüge, Logos, Bilder usw, auf der Verpackung der Produkte 28 wobei bspw. Histograms-of-Gradients (HoGs) genutzt werden. In einem nächsten Schritt werden, basierend auf der bekannten Distanz des Produktscan-Sensors 135 zu den abzubildenden Regalflächen (Gegenkathete) und/oder der Abbildungsgröße 31 (bzw. der darüber (bspw. relativ) abgeleiteten Entfernung zum Zentrum der Abbildung = Fokuslinie (als Ankathete 30 fungierend), über den Arcustangens der Winkel zu den Formmerkmalen erfasst. Fig. 12 zeigt dies auf- Diese Winkel können in einem Speicher abgelegt werden 725. Die Winkeländerungen werden durch die Auswertung im Zeitablauf ausgewertet 730. Dabei kann bspw. durch unterschiedliche Produktanordnungen in den Regalen und dem Erfassen der Winkel im Zeitablauf eine Regallückenerkennung "eingelernt" werden, wobei bestimmten Produkten unterschiedlich große Winkel zugeordnet werden.

### Bezugszeichen

- 1: mobile Basis
- 2: Abbildungserfassungseinheit
- 3: Abbildungsprozessierungseinheit
- 4: Abbildungsspeicher
- 5: Aufbau
- 6: Antriebseinheit
- 7: Antriebsräder
- 8: Energiequelle
- 9: Stützräder
- 10: Roboter
- 20: Systemrechner
- 21: Systemspeicher
- 22: externer Rechner
- 23: externer Speicher
- 24: externes System
- 25: Cloud
- 26: Terminal
- 27: Regal
- 28: Produkt
- 29: Gegenkathete
- 30: Ankathete
- 31: Abbildungsgröße
- 100: Ebene der Roboterfähigkeiten
- 110: Navigationsmodul
- 111: 2D/3D Erfassungsmodul
- 112: Pfadplanungsmodul
- 114: Selbstlokalisierungsmodul
- 115: Bewegungsplaner
- 117: Kartierungsmodul
- 118: Lademodul
- 119: Kartenmodul
- 120: Hardware-Ebene
- 121: Odometrieeinheit
- 122: Druckempfindliche Stoßstangen
- 123: Infrarot-ToF-Sensoren
- 124: LIDAR
- 125: Kamera
- 126: Alarmleuchten
- 127: Bedienelemente
- 128: Hindernissensor
- 129: Display
- 130: WLAN
- 131: Zigbee
- 132: Differentialantrieb
- 133: Ladesteuerung
- 134: Steuerung
- 135: Produktscan-Sensor
- 136: Produktscan-Sensor-Höhenverstellung
- 137: Motorsteuerung
- 140: Produkterfassungs- und Auswertungs-Modul
- 141: Produkt-Scan-Sensor-Steuerungsmodul
- 142: Wärmesensor
- 143: Wärmebildsensor
- 144: Wärmebildsensormatrix
- 145: Erfassungsbereich des Produktscan-Sensors
- 150: Bildfehler-Erkennungsmodul
- 151: Anonymisierungsmodul
- 152: Hindernisdetektionsmodul
- 153: Qualitätsparameter-Vergleichsmodul
- 160: Personenerkennungsmodul

## Patentansprüche

1. Verfahren zur Erstellung von Abbildungen von Produkten, Waren und/oder Regalen, umfassend
• Erfassung der Wärmeabstrahlung innerhalb des Erfassungsbereichs eines Produktscan-Sensors (135);
• Auswertung der räumlichen Strahlungsintensitätsverteilung;
• Erstellung einer Abbildung durch den Produktscan-Sensor (135) von Produkten, Waren und/oder Regalen in Abhängigkeit von der Auswertung.

2. Verfahren nach Anspruch 1, wobei der Erfassungsbereich für die Wärmeabstrahlung weitestgehend mit dem Erfassungsbereich des Produktscan-Sensors (135) überlappt.

3. Verfahren nach Anspruch 1, wobei die Erfassung der Wärmeabstrahlung in Form einer Matrix ausgewertet wird.

4. Verfahren nach Anspruch 3, wobei die Strahlungsintensität für Matrixelements ausgewertet wird.

5. Verfahren nach Anspruch 1, wobei die Strahlungsintensität in eine Temperatur konvertiert wird.

6. Verfahren nach Anspruch 5, wobei die erfasste Temperatur relativ zu einem Temperaturfenster ausgewertet wird.

7. Verfahren nach Anspruch 6, wobei das Temperaturfenster saisonal abhängig ist.

8. Verfahren nach Anspruch 1, wobei die Nicht-Erstellung der Abbildung erfolgt, wenn die Fläche, für die eine Mindeststrahlungsintensität ermittelt wurde, über einem Schwellwert liegt.

9. Verfahren nach Anspruch 3 und Anspruch 8, wobei der Schwellwert ein Anteil der Matrixelemente darstellt.

10. Verfahren nach Anspruch 1, weiter umfassend Speichern der Position, an der die Abbildung nicht erstellt wurde.

11. Verfahren nach Anspruch 10, wobei die Position mit einem Regal und/oder einer Warenablage assoziiert ist.

12. Verfahren nach Anspruch 10, weiter umfassend erneute Auswertung der Strahlungsintensität nach einer Zeit t.

13. Verfahren nach Anspruch 4, wobei die Verteilung, Form und/oder Intensität der Matrixelemente klassifiziert wird und basierend auf dem Klassifikationsergebnis eine Entscheidung über die Erstellung der Abbildung getroffen wird.

14. Vorrichtung zur Durchführung des Verfahrens nach Anspruch 1-13.

15. Vorrichtung nach Anspruch 15, wobei es sich bei der Vorrichtung um eine mobile, selbstangetrieben Plattform (1) handelt.

16. System umfassend eine mobile, selbstangetrieben Plattform (1), einen Rechner (20), einen Speicher (21), einen Wärmesensor (143), einen Produktscan-Sensor (135) und ein Hindernisdetektionsmodul (152) zur Detektion eines Hindernisses auf Basis der Auswertung des Wärmesensors (143).

17. System nach Anspruch 16, wobei die Erfassungsbereiche für den Produkt-Scan und die Wärmebilderfassung weitestgehend überlappen.
